(19) Europäisches Patentamt
European Patent Office
Office européen des brevets

(11) **EP 2 757 654 B1**

(12) **EUROPEAN PATENT SPECIFICATION**

(45) Date of publication and mention
of the grant of the patent:
**04.01.2017 Bulletin 2017/01**

(51) Int Cl.:
*H02J 7/00* (2006.01)     *H01M 10/613* (2014.01)
*H01M 10/6563* (2014.01)     *H01M 10/6235* (2014.01)

(21) Application number: **14150919.0**

(22) Date of filing: **13.01.2014**

(54) **Charging apparatus**

Ladegerät

Appareil de chargement

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.01.2013 JP 2013005559**

(43) Date of publication of application:
**23.07.2014 Bulletin 2014/30**

(73) Proprietor: **Makita Corporation
Anjo-shi, Aichi 446-8502 (JP)**

(72) Inventor: **Ishikawa, Yoshihiro
Anjo-shi, Aichi 446-8502 (JP)**

(74) Representative: **Kramer Barske Schmidtchen
Patentanwälte PartG mbB
European Patent Attorneys
Landsberger Strasse 300
80687 München (DE)**

(56) References cited:
**JP-A- 2002 335 640**     **JP-A- 2004 171 796**
**US-A1- 2007 298 315**

**Description**

BACKGROUND

The present invention relates to a charging apparatus that charges a rechargeable battery.

JP 2004-171796 A discloses a charging device for charging rechargeable batteries according to the preamble of claim 1: the charging device comprises a fan for cooling the battery whose activation is prolonged after the termination of the charging process a period of time depending on the termination temperature of the battery. US 2007/0298315 A1 discloses a battery cooling device.

A rechargeable battery capable of being repeatedly charged is employed as a power source for an electric power tool and others. Although depending on conditions such as level of charging current supplied to the rechargeable battery, charging the rechargeable battery is likely to subject the rechargeable battery to high temperatures, which may lead to an influence on a battery lifespan or performance. There is hence a charging apparatus to charge a rechargeable battery, which is provided with a function intended to cool the rechargeable battery by sending air to the rechargeable battery with a fan (see, e.g., JP Patent No. 3883395).

With the charging apparatus described in JP Patent No. 3883395, it is determined whether cooling by the fan is to be continued or discontinued, in response to a temperature or temperature gradient (temperature differential value) of the rechargeable battery after completion of charging the rechargeable battery. However, the fan may continue running because the temperature or temperature gradient does not reach a level to satisfy a condition to deactivate the fan due to various environmental factors and others. Accordingly, with the charging apparatus described in JP Patent No. 3883395, an elapsed time after completion of charging the rechargeable battery is counted by a timer, and the fan is controlled to be deactivated when a certain period time has elapsed.

SUMMARY

As described above, with the charging apparatus described in JP Patent No. 3883395, in the event that the fan does not stop based on the temperature or temperature gradient of the rechargeable battery, the fan continues running until the certain period time is elapsed (time out) after completion of charging the rechargeable battery, which may lead to cooling the rechargeable battery needlessly. In other words, even if the operation of the fan is no longer needed at a certain point, the fan continues running until the timer times out unless the temperature or temperature gradient of the rechargeable battery otherwise reaches the level to satisfy the condition to deactivate the fan. In this case, cooling is carried out needlessly. Needless cooling causes wasteful electric power consumption by the charging apparatus, which may unnecessarily increase electric power consumption by the charging apparatus.

With a charging apparatus provided with a fan to cool a rechargeable battery, it is an object to inhibit the fan from cooling unnecessarily and to reduce electric power consumption by the charging apparatus.

This object can be solved by providing a charging apparatus according to claim 1.

A charging apparatus of the present teachings includes: a charging unit configured to supply an electric power to a rechargeable battery to charge the rechargeable battery; a fan configured to send air to the rechargeable battery to cool the rechargeable battery; a control unit adapted to activate the fan when a predetermined cooling-execution condition is satisfied after initiation of charging the rechargeable battery by the charging unit and to deactivate the fan when a predetermined maximum cooling period of time is elapsed from completion of charging the rechargeable battery by the charging unit even when the predetermined cooling-execution condition has been satisfied after the completion of charging the rechargeable battery by the charging unit; an information obtaining unit configured to obtain cooling-performance information that represents coolability of the rechargeable battery being an object to charge by the charging unit; and a setting unit configured to set the maximum cooling period of time based upon the cooling-performance information obtained by the information obtaining unit.

With the charging apparatus configured as above, the maximum cooling period of time is set based upon the cooling-performance information, so that it is possible to determine the maximum cooling period of time appropriate to each rechargeable battery based upon the cooling-performance information of the rechargeable battery, thereby enabling inhibiting needless cooling and reducing electric power consumption of the charging apparatus.

The setting unit may set the maximum cooling period of time based upon a battery temperature and an environmental temperature in addition to the cooling-performance information. That is, the charging apparatus further includes: a battery temperature obtaining unit configured to obtain a battery temperature, the battery temperature being a temperature of the rechargeable battery; and an environmental temperature obtaining unit configured to obtain an environmental temperature, the environmental temperature being an ambient temperature of the rechargeable battery. The setting unit sets the maximum cooling period of time based upon the battery temperature obtained by the battery temperature obtaining unit and the environmental temperature obtained by the environmental temperature obtaining unit after completion of charging the rechargeable battery.

Considering the battery temperature and the environmental temperature after completion of charging the rechargeable battery in addition to the cooling-performance information of the rechargeable battery allows the control unit to determine with high precision how long at the most the fan needs to be kept activated to cool the rechargeable battery down to an intended temperature level after completion of charging the rechargeable battery (i.e., the maximum cooling period of time).

The maximum cooling period of time may be determined and set in various ways by the setting unit. For example, in order that the fan is deactivated when the battery temperature is equal to or smaller than a predetermined specified temperature, the setting unit may set the maximum cooling period of time based upon the predetermined specified temperature. Still further, in order that the fan is deactivated when a change rate of the battery temperature is equal to or greater than a predetermined specified change rate being zero or less, the setting unit may set the maximum cooling period of time based upon the predetermined specified change rate.

In accordance with a method of setting the maximum cooling period of time based upon the specified temperature, a period of time estimated for the battery temperature to become equal to or lower than the specified temperature is set to the maximum cooling period of time. Accordingly, it is possible to inhibit the fan from continuously being activated even when the battery temperature falls below the specified temperature, which contributes to effective reduction in electric power consumption.

In accordance with a method of setting the maximum cooling period of time based upon the specified change rate, a period of time estimated for the change rate of the battery temperature to become equal to or greater than the specified change rate is set to the maximum cooling period of time. Accordingly, it is possible to inhibit the fan from continuously being activated even when the change rate of the battery temperature exceeds the specified change rate, which contributes to effective reduction in electric power consumption.

It is understood that the information obtaining unit may obtain the cooling-performance information of the rechargeable battery from various sources. For example, the cooling-performance information may be obtained from the rechargeable battery. That is, the rechargeable battery includes a storage unit configured to store the cooling-performance information of the rechargeable battery, and the information obtaining unit obtains the cooling-performance information from the storage unit.

As described above, the cooling-performance information of the rechargeable battery may be preliminarily stored in the rechargeable battery itself, and the charging apparatus may obtain the cooling-performance information of the rechargeable battery from the rechargeable battery being an object to be charged. Therefore, it is possible to reliably and easily obtain the cooling-performance information of the rechargeable battery being the object to be charged.

Some rechargeable batteries are configured not to be allowed to cool down by the air sent from the charging apparatus, i.e., do not include a cooling mechanism that receives air from an external unit for cooling down.

In light of the foregoing, the charging apparatus of the present teachings may further include a determining unit configured to determine whether or not the rechargeable battery includes a cooling mechanism to cool the rechargeable battery by receiving the air sent from the fan. The control unit may deactivate the fan at least after completion of charging the rechargeable battery when the determining unit determines that the rechargeable battery does not include the cooling mechanism.

At a time of charging the rechargeable battery not having the cooling mechanism, the fan is deactivated at least after completion of charging the rechargeable battery. Therefore, wasteful operation of the fan can be inhibited, which contributes to reduction in the electric power consumption of the charging apparatus.

The charging apparatus of the present teachings may be configured as below. That is, the charging apparatus further includes a calculating unit configured to calculate the change rate of the battery temperature. Even if the maximum cooling period of time has not elapsed after completion of charging the rechargeable battery, the control unit deactivates the fan when the change rate of the battery temperature calculated by the calculating unit is negative and is equal to or greater than a predetermined change rate negative threshold value smaller than zero.

In the course of the battery-temperature dropping by cooling, the change rate of the battery temperature (negative change rate) gradually increases, i.e., the battery-temperature drop becomes moderate. When the temperature drop rate becomes moderate to a certain degree, a balance between the electric power consumption and the cooling efficiency is deteriorated. In other words, it becomes difficult to yield a cooling efficiency appropriate to the electric power consumption. Therefore, the change rate negative threshold value is preliminarily set, and when the change rate becomes equal to or greater than the change rate negative threshold value, the fan is deactivated regardless of whether the maximum cooling period of time has elapsed. Accordingly, it is possible to effectively reduce electric power consumption while appropriately cooling down the rechargeable battery.

The charging apparatus of the present teachings may be configured further as below. That is, the charging apparatus further includes a calculating unit configured to calculate the change rate of the battery temperature. Even if the maximum cooling period of time has not elapsed after completion of charging the rechargeable battery, the control unit deactivates the fan when the change rate of the battery temperature calculated by the calculating unit is equal to or greater than a predetermined change rate positive threshold value equal to or greater than zero.

For example, when the ambient temperature of the rechargeable battery is higher than the battery temperature, the battery temperature is sometimes likely not to drop even after receiving air from the fan, and the rechargeable battery may be heated up rather than cooled down by the air sent to the rechargeable battery side. Therefore, the change rate positive threshold value is preliminarily set, and when the change rate becomes equal to or greater than the change rate positive threshold value, the fan is deactivated regardless of whether the maximum cooling period of time has elapsed. Accordingly, it is possible to effectively reduce electric power consumption while inhibiting increase in the battery temperature of the rechargeable battery.

BRIEF DESCRIPTION OF THE DRAWINGS

Embodiments will be described below with reference to drawings. The present teachings should not be construed as limited to the specific means, structures, and so on set forth in the embodiments below and can be achieved in any modes within the scope of the present teachings. Embodiments of the present teachings should encompass modes that omit a part of the structures of the embodiments below as long as the mode can solve an object of the present invention. Embodiments of the present teachings should further encompass modes formed in appropriate combination of a plurality of embodiments below.

FIG. 1A is a perspective view illustrating an outer appearance of a battery pack of embodiments of the present teachings;
FIG. 1B is a perspective view illustrating an outer appearance of a charging apparatus of the embodiments of the present teachings; and
FIG. 2 is a circuit view illustrating an electrical configuration of the battery pack and the charging apparatus of the embodiments of the present teachings;
FIG. 3 is a battery cooling characteristic diagram exemplarily explaining temperature changes of the battery in the course of cooling;
FIG. 4A is a diagram showing a relationship between a specific heat, and a cooling coefficient $\alpha$, of each battery;
FIG. 4B is a table describing an example of a calculation result of the cooling coefficient $\alpha$ of each different battery A, B, C, and D incorporated in the battery pack.
FIG. 5A is a flowchart for illustrating a charging and fan-control process performed by the charging apparatus;
FIG. 5B is a continuation flowchart from FIG. 5A; and
FIG. 6 is an explanatory diagram showing an example of a temperature damping factor matrix.

DETAILED DESCRIPTION OF THE PREFERRED EMBODIMENTS

[First Embodiment]

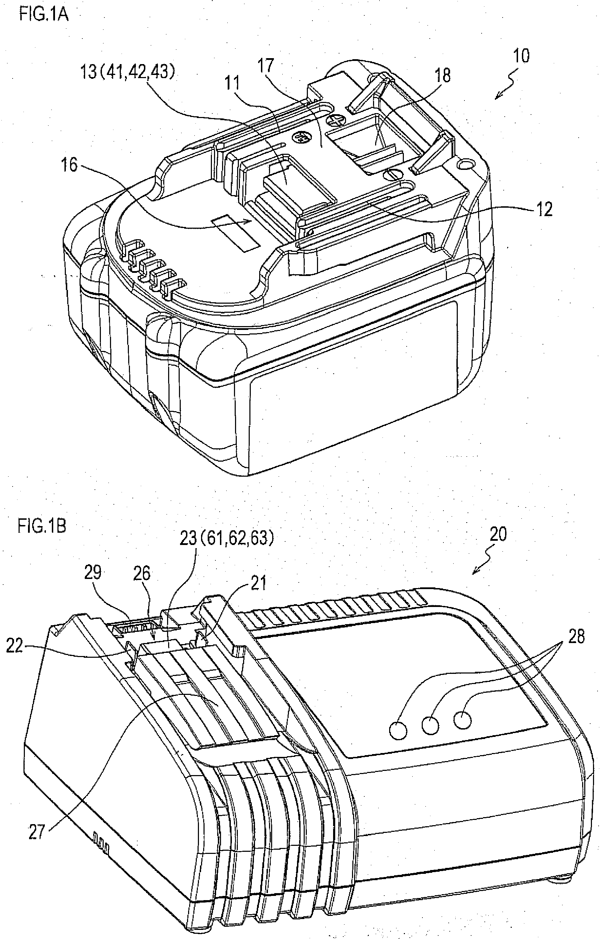

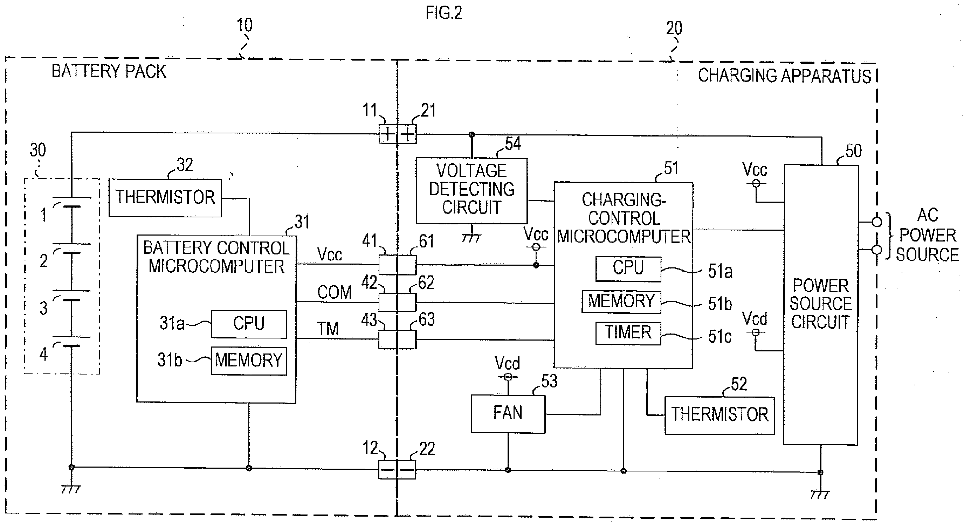

Configurations of a battery pack 10 and a charging apparatus 20 of the first embodiment of the present teachings will be described with reference to FIGs. 1A and 1B. The battery pack 10, is mounted on the charging apparatus 20, and then a battery 30 (see FIG. 2, corresponding to a rechargeable battery) incorporated in the battery pack 10 is charged. The battery pack 10 is detachably attached to an electric power tool, such as a rechargeable impact driver, a rechargeable driver drill, and so on, and is employed to supply a driving electric power to the electric power tool. The concept of the "rechargeable battery" should be construed to include not only the battery 30 of embodiments of the present teachings but also the battery pack 10 incorporating the battery 30.

1. Outline of Battery Pack 10 and Charging Apparatus 20

As illustrated in FIGs. 1A and 1B, the battery pack 10 is formed, on one side surface, with a battery-side attaching portion 17 that is detachably attached to a charging-side attaching portion 27 of the charging apparatus 20 or a tool main body of the electric power tool. The battery-side attaching portion 17 is provided, at predetermined positions, with a battery-side terminal 16 and a vent 18. The battery-side terminal 16 is electrically connected to a charging-side terminal 26 of the charging apparatus 20 or a tool-side terminal (not illustrated) of the tool main body. The vent 18 serves to receive air sent from the charging apparatus 20 into the battery pack 10.
The battery-side terminal 16 is configured to include a battery-side positive electrode terminal 11 and a battery-side negative electrode terminal 12, which are electrically excited by charging/discharging current, and further a battery-side signal terminal group 13. The battery-side signal terminal group 13 consists of a plurality of terminals including at least a control voltage input terminal 41, a battery-side common signal terminal 42, and a battery-temperature output terminal 43 (all illustrated in FIG. 2).
The vent 18 is formed to face a air outlet 29 of the charging apparatus 20 when the battery pack 10 is mounted on the charging apparatus 20. Accordingly, once a fan 53 (see FIG. 2) incorporated in the charging apparatus 20 is activated (spun), the fan 53 serves to blow out air through the air outlet 29 of the charging apparatus 20, and the air is then introduced into the battery pack 10 via the vent 18 of the battery pack 10. The battery 30 housed inside the battery pack 10 is thus cooled by this introduced air.

As illustrated in FIG. 1B, the charging apparatus 20 generates, from an external power source (not illustrated, AC 100V power source according to the first embodiment), a direct current power source for charging (charging electric power) that charges the battery 30 of the battery pack 10. The charging apparatus 20 is formed, at one end of its upper surface, with the charging-side attaching portion 27, to which the battery pack 10 is attached. The charging-side attaching portion 27 is provided, at predetermined positions (inside the charging-side attaching portion 27), with the charging-side terminal 26 and the air outlet 29 that blows out air for cooling the battery 30 of the battery pack 10.

The charging-side terminal 26 is configured to include a charging-side positive electrode terminal 21 and a charging-side negative electrode terminal 22, which serve to supply the charging electric power to the battery pack 10, and further a charging-side signal terminal group 23. The charging-side signal terminal group 23 consists of a plurality of terminals, including at least a control voltage output terminal 61, a charging-side common signal terminal 62, and a battery-temperature input terminal 63 (all illustrated in FIG. 2).

The air outlet 29 serves to expel or blow off air generated by the operation of the fan 53 housed in the charging apparatus 20. The fan 53 is activated in a state where the battery pack 10 is attached to the charging apparatus 20, and the air is then discharged through the air outlet 29. The discharged air is introduced into the battery pack 10 via the vent 18 of the battery pack 10.

The charging apparatus 20 is further provided with a display unit 28 that includes three LEDs and indicates externally the operating condition of the charging apparatus 20, the charged condition of the battery pack 10, and so on. When the battery pack 10 is mounted on the charging apparatus 20 configured as described above, with the charging-side attaching portion 27 and the battery-side attaching portion 17, the battery-side terminal 16 of the battery pack 10 is electrically connected to the charging-side terminal 26 of the charging apparatus 20.

More specifically, the battery-side positive electrode terminal 11 of the battery pack 10 is connected to the charging-side positive electrode terminal 21 of the charging apparatus 20, and the battery-side negative electrode terminal 12 of the battery pack 10 is connected to the charging-side negative electrode terminal 22 of the charging apparatus 20. Terminals 41, 42, and 43, constituting the battery-side signal terminal group 13 of the battery pack 10, are connected to terminals 61, 62, and 63, constituting the charging-side signal terminal group 23 of the charging apparatus 20, respectively (see FIG. 2). Accordingly, a state is established in which the charging apparatus 20 is allowed to charge the battery 30 of the battery pack 10.

2. Electrical Configuration of Battery Pack 10

A circuit configuration of the battery pack 10 illustrated in FIG. 1A will be described with reference to FIG. 2 As illustrated in FIG. 2, the battery pack 10 is provided with the battery 30, a battery control microcomputer 31, which monitors the state of the battery 30 and controls charging and discharging, and a thermistor 32 that detects a temperature of the battery 30 (hereinafter referred to as battery temperature).

The battery 30 is composed of a plurality of battery cells 1, 2, 3, and 4 (four cells according to the first embodiment) connected in series. The positive electrode of the battery 30 is connected to the battery-side positive electrode terminal 11, and the negative electrode of the battery 30 is connected to the battery-side negative electrode terminal 12. According to the first embodiment, any of the battery cells 1, 2, 3, and 4 are lithium-ion rechargeable batteries. However, it is a mere example, and the battery cells may be other types of rechargeable batteries.

The thermistor 32 is arranged in the vicinity of the battery 30 to detect the battery temperature and to output the detection signal to the battery control microcomputer 31. The thermistor 32 is a mere example of a device to detect a battery temperature, and the battery temperature may be detected by other censors or detecting methods. This is also applied to a thermistor 52 of the charging apparatus 20 described later.

The battery control microcomputer 31 is a microcomputer configured with a CPU 31a, a memory 31b, and so on. More specifically, the memory 31b is configured with a ROM, a RAM, and various storage device, such as a flash memory.

When the battery pack 10 is attached to the charging apparatus 20 and a control voltage Vcc is supplied from the charging apparatus 20, the battery control microcomputer 31 is activated by the control voltage Vcc and performs various controls in accordance with various programs stored in the memory 31b. The memory 31b stores therein a cooling coefficient $\alpha$ employed by the charging apparatus 20 as well as the various programs.

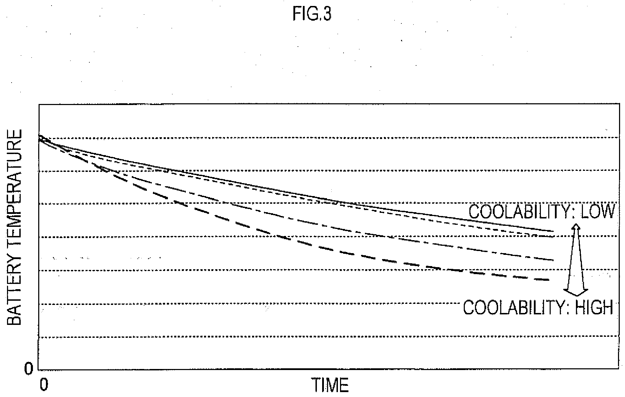

Described below is the cooling coefficient $\alpha$. An experiment found that characteristics shown in FIG. 3 (battery cooling characteristics) typically represented a relationship between a cooling-down time and a battery temperature when a battery at a certain battery temperature either cools down naturally or is forced to cool down by use of a fan or the like. FIG. 3 shows cooling characteristics of four batteries having different cooling performances (i.e., coolability, how easily the battery can be cooled down). The greater the temperature drop relative to the same cooling-down time, the higher the cooling performance. The less the temperature drop relative to the same cooling-down time, the lower the cooling performance.

The battery cooling characteristics in FIG. 3 may be approximated by an equation (1) as below:

$$T(t) = Ts + (T(0) - Ts) * EXP(-\alpha*t) \qquad (1)$$

wherein t is a period of time (seconds) from the start of cooling; $T(t)$ is a battery temperature in the period of time t (seconds) from the start of cooling; $T(0)$ is an initial battery temperature at a time of the start of cooling; Ts is an environmental temperature being an ambient temperature of the battery pack 10 (extended to ambient temperature of the battery 30); and $\alpha$ is a cooling coefficient.

The cooling coefficient $\alpha$ is information representing how easily the battery can be cooled down (coolability, cooling performance, etc.). According to the first embodiment, the greater the cooling coefficient $\alpha$ is, the higher the cooling performance is (the battery is easily cooled down). The smaller the cooling coefficient $\alpha$ is, the lower the cooling performance is (the battery is not easily cooled down).

The cooling coefficient $\alpha$ is unique to each battery. Also according to the first embodiment, the memory 31b of the battery pack 10 stores a cooling coefficient $\alpha$ unique to the battery 30. The cooling coefficient $\alpha$ of the battery 30 is determined based upon various characteristics, specifications, and conditions of the battery pack 10, such as: a volume of the battery 30; a volume of a space inside the battery pack 10; a specific heat of a casing of the battery pack 10; specific heats of the battery cells 1, 2, 3, and 4 constituting the battery 30; and a flow quantity or flow rate, in the battery pack 10, of the air introduced into the battery pack 10 by the fan 53 of the charging apparatus 20.

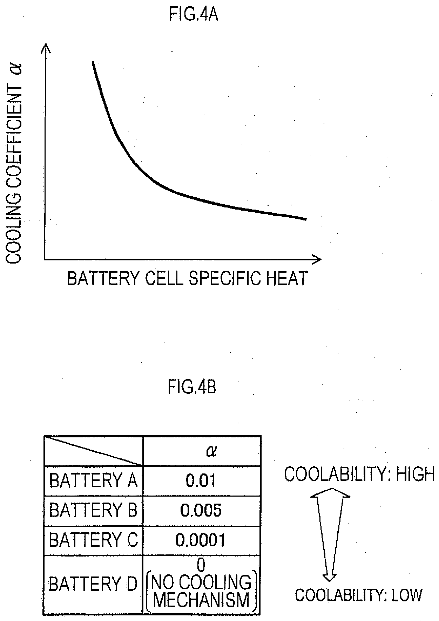

For example, as seen from a relationship between the specific heat, and the cooling coefficient $\alpha$, of each of the battery cells 1, 2, 3, and 4 (see FIG. 4A), the greater the specific heat is, the lower the cooling performance is. Contrarily, relative to the volume of the space inside the battery pack 10, for example, the greater the volume of the space, the higher the cooling performance.

The cooling coefficient $\alpha$ may be obtained theoretically or experimentally. When the cooling coefficient $\alpha$ is to be obtained experimentally, the fan 53 is activated under the condition where the environmental temperature and the battery temperature are both set to specified temperatures. The changes in the battery temperatures are then measured and the cooling coefficient $\alpha$ may be obtained through a predetermined calculation using the measurement result of the battery temperature.

FIG. 4B exemplarily shows calculation results of cooling coefficients $\alpha$ of batteries A, B, C, and D housed inside battery packs, respectively. The batteries A, B, C, and D are all different types, but the battery packs are all the same in size and shape. The battery pack housing the battery D is not formed with a vent. In other words, the battery pack for the battery D does not incorporate a cooling mechanism that receives and circulates air sent from the charging apparatus. As obviously seen from FIG. 4B, the battery D without the cooling mechanism exhibits the lowest cooling performance among all of the four batteries A, B, C, and D, and the battery D also exhibits a cooling coefficient $\alpha$ at zero. In other words, the cooling coefficient $\alpha$ at zero represents that the cooling mechanism is not provided.

When the cooling coefficient $\alpha$ in the above equation (1) is set to zero, the calculation result shows that the battery temperature does not change regardless of the elapsed time. However, in fact, even the battery pack not including the cooling mechanism cools down naturally, starting from its surface. That is, practically speaking, there is no such thing as the cooling coefficient $\alpha$ being zero. However, according to the first embodiment, for simple calculation purposes, the cooling coefficient $\alpha$ for the battery pack not including the cooling mechanism is set to zero.

As further seen from FIG. 4B, the higher the cooling performance is, the greater the cooling coefficient $\alpha$ is. Therefore, the battery having the highest cooling performance is cooled down fastest under the same cooling conditions. According to the first embodiment, the cooling coefficient $\alpha$ of the battery 30 is obtained in advance theoretically or experimentally and is stored in the memory 31b.

Among the various processes implemented by the battery control microcomputer 31, there is a process at which the battery temperature calculated (detected) based upon a detection signal from the thermistor 32 and the cooling coefficient $\alpha$ stored in the memory 31b are transmitted to the charging apparatus 20 at a request from the charging apparatus 20. The cooling coefficient $\alpha$ is transmitted via the battery-side common signal terminal 42, and the battery temperature is transmitted via the battery-temperature output terminal 43.

3. Electrical Configuration of Charging Apparatus 20

A circuit configuration of the charging apparatus 20 illustrated in FIG. 1 will be described next with reference to FIG. 2. As illustrated in FIG. 2, the charging apparatus 20 incorporates: a power source circuit 50; a charging-control microcomputer 51; the thermistor 52; the fan 53; and a voltage detecting circuit 54.

The power source circuit 50 is supplied with a power source voltage from an external power source (according to the embodiment, AC 100V power source) and generates and outputs a plurality of types of DC (direct-current) voltages. More specifically, the power source circuit 50 generates: a charging voltage for charging the battery 30; a control voltage Vcc serving as a power source to activate the charging-control microcomputer 51 and so on; and a fan-activating voltage Vcd serving as a power source to activate the fan 53.

The charging voltage generated by the power source circuit 50 is outputted to the battery 30 of the battery pack 10 via the charging-side positive electrode terminal 21 and the charging-side negative electrode terminal 22. When the battery pack 10 is mounted on the charging apparatus 20, the control voltage Vcc is supplied also to the battery control microcomputer 31 of the battery pack 10 via the control voltage output terminal 61.

The voltage detecting circuit 54 detects the charging voltage for the battery 30 and outputs the detection result to the charging-control microcomputer 51. The thermistor 52 is located at a predetermined area having a temperature less different from the external environmental temperature. The predetermined area is inside the casing of the charging apparatus 20, and the thermistor 52 detects the temperature at the area inside the casing. As mentioned above, the temperature detected by the thermistor 52 is actually the temperature inside the casing. However, since the temperature detected has a small difference relative to the environmental temperature, the temperature detected is employed as the environmental temperature by the charging-control microcomputer 51. As already mentioned above, when the battery pack 10 is attached to the charging apparatus 20, the fan 53 is activated upon charging the battery 30 so as to send air to cool the battery 30 during and after charging.

The charging-control microcomputer 51 is a microcomputer mainly consisting of a CPU 51a, a memory 51b, a timer 51c, and so on. The memory 51b is configured with a ROM, a RAM, and various storage devices, such as a flash memory. The timer 51c may be a software timer or a hardware timer.

The charging-control microcomputer 51 is supplied with the control voltage Vcc from the power source circuit 50 and is then activated by the control voltage Vcc, contributing to implement various controls in accordance with the various programs stored in the memory 51b. The memory 51b stores a target temperature Tf to deactivate or stop the fan (described later, hereinafter referred to as fan-deactivating target temperature Tf) as well as the various programs.

The charging-control microcomputer 51 controls the operation of the power source circuit 50 in response to the charging voltage detected by the voltage detecting circuit 54, various information concerning the charged states etc. of the battery 30 transmitted from the battery pack 10, and so on, thereby controlling charging the battery 30.

The charging-control microcomputer 51 controls the operation of the fan 53 in response to the temperature (environmental temperature) detected by the thermistor 52 and the cooling coefficient $\alpha$ and the battery temperature transmitted from the battery pack 10.

When the charging-control microcomputer 51 requires the battery pack 10 to provide various information concerning the cooling coefficient $\alpha$, the battery temperature, the charged states, and so on, the charging-control microcomputer 51 sends requirement data to the battery pack 10 via the charging-side common signal terminal 62. The charging-control microcomputer 51 obtains, via the charging-side common signal terminal 62, the response data from the battery pack 10 relative to the requirement data. However, the battery temperature is obtained via the battery-temperature input terminal 63.

4. Outline of Controlling Fan 53 by Charging-Control Microcomputer 51

Controlling the fan 53 by the charging-control microcomputer 51 will be described in more detail.

When the battery pack 10 is attached to the charging apparatus 20 and the charging-control microcomputer 51 starts charging the battery 30, the charging-control microcomputer 51 initiates activating (spinning) the fan 53.

During the battery 30 being charged, the charging-control microcomputer 51 obtains the battery temperature from the battery pack 10 and monitors the battery temperature. As long as the battery temperature or its change rate (temperature gradient) satisfies a predetermined cooling-execution condition, the charging-control microcomputer 51 continues activating the fan 53.

Even after completion of charging the battery 30, the charging-control microcomputer 51 continues activating the fan 53 as long as a predetermined cooling-execution condition is satisfied. According to the first embodiment, the cooling-execution condition after completion of charging the battery 30 may be, for example: (i) the battery 30 is in a high-temperature state where the battery temperature is equal to or greater than a predetermined high-temperature determination threshold value, having a negative temperature gradient (change rate) of the battery temperature (i.e., the battery temperature dropping) and equal to or smaller than a predetermined change rate negative threshold value "-a"; or (ii) the battery temperature is in the aforementioned high-temperature state, having a positive temperature gradient of the battery temperature (i.e., the battery temperature rising), and a predetermined period of time has not elapsed since the completion of charging the battery 30. The cooling-execution condition in the course of charging may be the same as, or other than, the aforementioned cooling-execution condition after completion of charging the battery 30. The term "completion" herein incorporates that the battery 30 is fully charged and that charging the battery 30 is terminated before the battery 30 is fully charged.

After completion of charging the battery 30, the charging-control microcomputer 51 activates the fan 53 when at least one of the aforementioned cooling-execution conditions (i) and (ii) is satisfied and deactivates the fan 53 when neither of the conditions (i) and (ii) are satisfied.

In this regard, however, the charging-control microcomputer 51 stops the fan 53 if a maximum cooling period of time Tm has elapsed since completion of charging the battery 30 even when at least one of the conditions (i) and (ii) is satisfied. This control is preferable in order to inhibit the fan 53 from possibly continuing to spin in the event that the cooling-execution condition is determined to have been satisfied by the charging-control microcomputer 51 due to various environmental factors and others, even when cooling by the fan 53 is no longer necessary.

According to the first embodiment, the maximum cooling period of time Tm is set by the charging-control microcomputer 51 through calculation based upon the cooling coefficient $\alpha$ obtained from the battery pack 10 attached to the charging apparatus 20. That is, the maximum cooling period of time Tm is calculated and set dynamically in response to the cooling performance of the battery 30 in the battery pack 10 attached to the charging apparatus 20.

The calculation of the maximum cooling period of time Tm by the charging-control microcomputer 51 will be described below. When charging the battery 30 is completed, the charging-control microcomputer 51 reads out the fan-deactivation target temperature Tf from the memory 51b, obtains the cooling coefficient $\alpha$ and the battery temperature from the battery pack 10, and detects the environmental temperature by the thermistor 52 of the charging apparatus 20. The fan-deactivation target temperature Tf is determined in advance to fall within a temperature range considered acceptable to stop cooling by the fan 53 and is stored in the memory 51b.

The charging-control microcomputer 51 calculates the maximum cooling period of time Tm by use of the fan-deactivation target temperature Tf, the cooling coefficient $\alpha$, the battery temperature, and the environmental temperature. That is, the charging-control microcomputer 51 estimates how long it will take for the battery temperature to decline to the fan-deactivation target temperature Tf after completion of charging the battery 30 and sets the time estimated to the maximum cooling period of time Tm.

More specifically, according to the first embodiment, the maximum cooling period of time Tm is calculated by the above equation (1). That is, in the above equation (1), the battery temperature T(t) in the left side of the equation is referred to as the fan-deactivation target temperature Tf, the environmental temperature Ts in the first and second terms of the right side of the equation is referred to as the environmental temperature detected above at a time of completing charging the battery 30, the initial battery temperature T(0) in the second term of the right side of the equation is referred to as the battery temperature obtained above at a time of completing charging the battery 30, and the symbol "$\alpha$" in the second term of the right side of the equation is referred to as the cooling coefficient $\alpha$ obtained above, thereby calculating the time t as an estimated time required for the battery temperature to reach the fan-deactivation target temperature Tf since the completion of charging the battery 30.

The charging-control microcomputer 51 sets the time t calculated as described above to the maximum cooling period of time Tm. After completion of charging the battery 30, the charging-control microcomputer 51 controls the timer 51c to time out after an elapsed time since completion of charging the battery 30. Even if the cooling-execution condition has been satisfied, when the maximum cooling period of time Tm has elapsed since completion of charging the battery 30, the charging-control microcomputer 51 deactivates the fan 53.

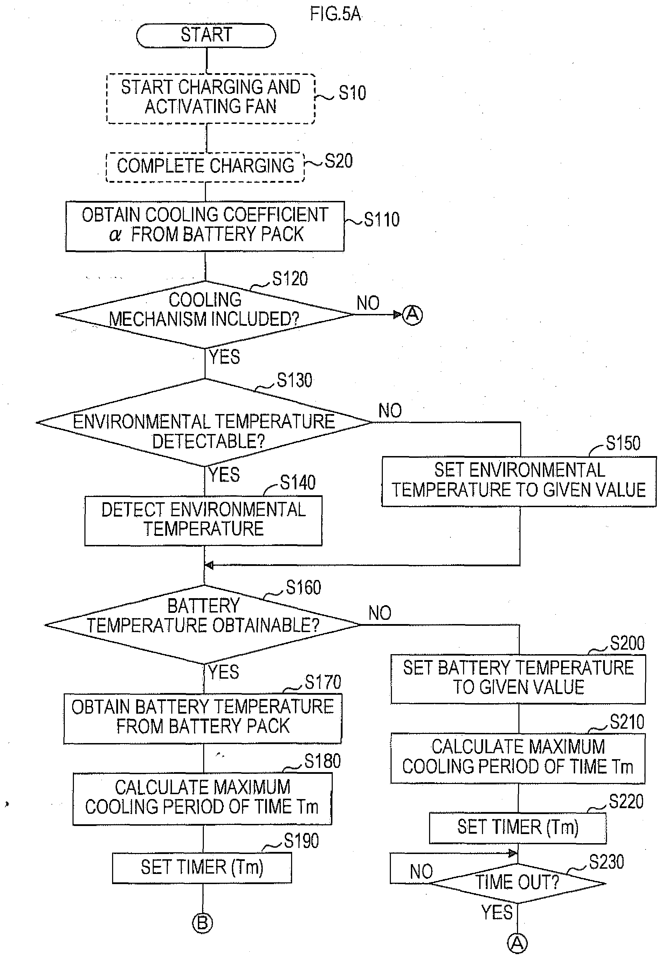

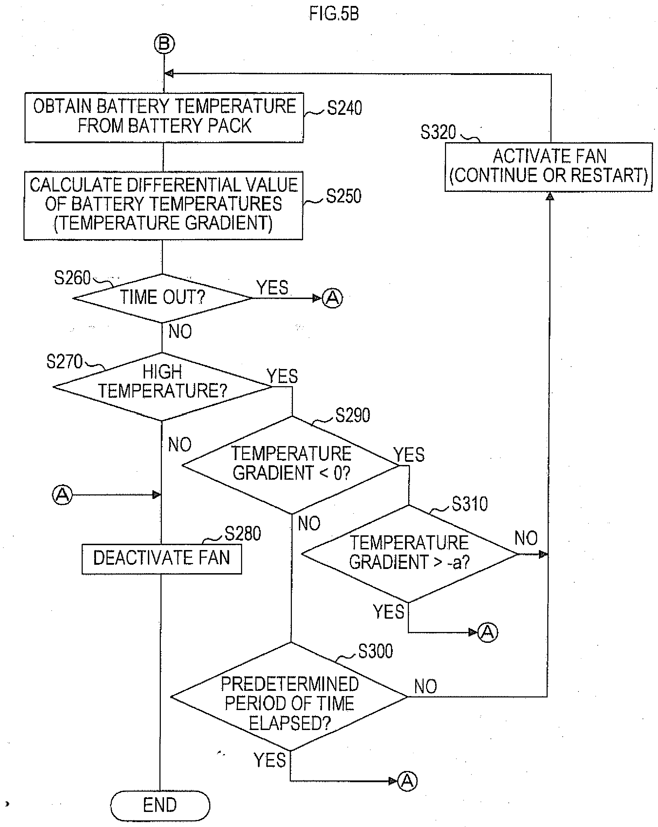

5. Description of Charging and Fan-Control Process Referring to FIGs. 5A and 5B, described is a charging and fan-control process implemented by the charging-control microcomputer 51 of the charging apparatus 20, so that the battery 30 is charged and cooled. Once the battery pack 10 is mounted on the charging apparatus 20, the CPU 51a of the charging-control microcomputer 51 reads out, from the memory 51b, a program to perform the charging and fan-control process illustrated in FIGs. 5A and 5B and repetitively implements the program at a predetermined interval.

The CPU 51a of the charging-control microcomputer 51 initiates the charging and fan-control process of FIGs. 5A and 5B by initially charging the battery 30 and activating the fan 53 at S10. At S20, the CPU 51a completes charging the battery 30 when a predetermined charging-completion condition is satisfied. Practically speaking, at S10 and S20, various controls are implemented, including controlling the power source circuit 50 in response to various conditions of the battery 30 and deactivating the fan 53 when the cooling-execution condition is not satisfied (i.e., when cooling is no longer necessary). However, these controls in the course of charging the battery 30 are not essential to the present teachings and description thereof will be omitted.

When charging is terminated at S20, the process proceeds to S110, wherein the CPU 51a obtains the cooling coefficient $\alpha$ from the battery pack 10. At S120, the CPU 51a determines, based upon the cooling coefficient $\alpha$ obtained at S110, whether or not the battery pack 10 incorporates the cooling mechanism. As described above, according to the first embodiment, when the cooling coefficient $\alpha$ is zero, the battery pack 10 is considered not to include the cooling mechanism. Therefore, when the cooling coefficient $\alpha$ is zero, the CPU 51a determines that the battery pack 10 is not provided with the cooling mechanism, and the process proceeds to S280. At S280, the fan 53 is stopped, and this charging and fan-control process is ended. When the cooling coefficient $\alpha$ is greater than zero, the CPU 51a determines at S120 that the battery pack is provided with the cooling mechanism, and the process proceeds to S130 from S120.

At S130, the CPU 51a determines whether or not the environmental temperature is detectable. According to the first embodiment, when the CPU 51a receives the detection signal from the thermistor 52 of the charging apparatus 20 and the environmental temperature indicated by the detection signal is not abnormal, the CPU 51a determines at S130 that the environmental temperature is detectable. This determination may be made by different ways other than the above.

When the CPU 51a determines at S130 that the environmental temperature is detectable, the process proceeds to S140, at which the CPU 51a detects the environmental temperature based upon the detection signal sent from the thermistor 52. When the CPU 51a determines at S130 that the environmental temperature is not detectable, the process proceeds to S150, at which the environmental temperature is set to a predetermined given value.

The CPU 51a determines at S160 whether or not the battery temperature is obtainable from the battery pack 10. According to the first embodiment, the CPU 51a requests the battery temperature from the battery pack 10 via the charging-side common signal terminal 62. When the CPU 51a receives data related to the battery temperature from the battery pack 10 via the battery-temperature input terminal 63, the CPU 51a determines at S160 that the battery temperature is obtainable. This determination may be made by different ways other than the above.

When the CPU 51a determines at S160 that the battery temperature is not obtainable, the process proceeds to S200, at which the battery temperature is set to a predetermined given temperature. Here, the given environmental temperature set at S150 when the environmental temperature is not detectable, and the given battery temperature set at S200 when the battery temperature is not obtainable from the battery pack 10 may be determined arbitrarily. According to the first embodiment, such environmental temperature and battery temperature respectively refer to predetermined specified temperatures employed when experimentally obtaining the cooling coefficient $\alpha$.

At S210, the maximum cooling period of time Tm is calculated by the above-described calculation method with the cooling coefficient $\alpha$ obtained at S110, the environmental temperature detected at S140 or set at S150, the battery temperature set at S200, and the fan-deactivation target temperature Tf preliminarily stored in the memory 51b.

At S220, the CPU 51a sets the timeout time of the timer 51c to the maximum cooling period of time Tm calculated at S210 and controls the timer 51c to start timing. After the start of timing by the timer 51c, the CPU 51a determines at S230 whether or not it has timed out, i.e., whether or not the maximum cooling period of time Tm has elapsed after starting counting by the timer 51c (after completion of charging the battery 30). The process at S230 is repetitively performed until the timer 51c times out. When it times out, the process proceeds to S280, wherein the fan 53 is deactivated.

When the CPU 51a determines at S160 that the battery temperature is obtainable, the process proceeds to S170, at which the CPU 51a obtains the battery temperature received from the battery pack 10. At S180, the maximum cooling period of time Tm is calculated by the above-described calculation method with the cooling coefficient $\alpha$ obtained at S110, the environmental temperature detected at S140 or set at S150, the battery temperature set at S170, and the fan-deactivation target temperature Tf preliminarily stored by the memory 51b. At S190, as is the case with S220, the CPU 51a sets the timeout time of the timer 51c to the maximum cooling period of time Tm calculated at S180 and controls the timer 51c to start timing.

After starting timing by the timer 51c, the process proceeds to S240 in FIG. 5B, at which the CPU 51a obtains the battery temperature from the battery pack 10. At S250, the CPU 51a calculates a differential value of the battery temperatures obtained (temperature gradient). For example, the differential value may be calculated based upon the difference between the battery temperature obtained at S240 at a previous time and the battery temperature newly obtained at S240, but the differential value may be calculated in different ways.

At S260, as is the case with S230, the CPU 51a determines whether or not it has timed out. When the CPU 51a determines at S260 that the timer 51c has timed out, the process proceeds to S280, at which the fan 53 is deactivated. When the CPU 51a determines at S260 that the timer 51c has not yet timed out, the process proceeds to S270, at which the CPU 51a determines whether or not the battery 30 is in the above-described high-temperature state, where the battery temperature obtained at S240 is greater than the high-temperature determination threshold value. When the CPU 51a determines at S270 that the battery 30 is not in the high-temperature state, cooling by the fan 53 is no longer necessary and the fan 53 is deactivated at S280.

When the CPU 51a determines at S270 that the battery 30 is in the high-temperature state, the process proceeds to S290, at which the CPU 51a determines whether or not the temperature gradient calculated at S250 is negative. When the temperature gradient is negative, the process proceeds to S310, at which the CPU 51a determines whether the temperature gradient is greater than the above-described change rate negative threshold value "-a".

When the battery temperature gradient is equal to or smaller than the change rate negative threshold value "-a", it indicates that the battery temperature is still dropping and cooling is still needed. The fan 53 is activated at S320 and the process then returns to S240. Regarding the operation at S320, when the fan 53 has stopped, the fan operation is restarted at S320, while, when the fan 53 has been activated, the fan operating condition is continued at S320.

When the CPU 51a determines at S310 that the battery temperature gradient is greater than the change rate negative threshold value "-a", it indicates that the drop in the battery temperatures has progressed and the temperature gradient is thus becoming smaller, wherein cooling by the fan 53 is less needed. In this case, at S280, the fan 53 is deactivated.

When the CPU 51a determines at S290 whether or not the temperature gradient is not negative (i.e., zero or greater), it indicates that the battery temperature has not changed over time or is rising. The process then proceeds to S300, at which the CPU 51a determines whether or not the predetermined period of time has not elapsed after completion of charging the battery 30. When the predetermined period of time has elapsed, the fan 53 is activated (restarted or continued) at S320 and the process then returns to S240. When the predetermined period of time has elapsed at S300, the fan 53 is deactivated at S280.

The determination at S300 of whether or not the predetermined period of time has elapsed is not always necessary; the fan 53 may be deactivated immediately when the CPU 51a determines at S290 that the temperature gradient is equal to or greater than zero. According to the first embodiment, the determination of whether or not the predetermined period of time has elapsed (S300) is directed to an elapsed time since completion of charging the battery 30, but alternatively may be directed to a duration time of the state in which the temperature gradient has been determined at S290 to be equal to or greater than zero. According to the first embodiment, the determination at S290 is based upon a determination reference value of zero, but alternatively may be based upon a predetermined positive determination reference value greater than zero. In this case, the CPU 51a may determine at S290 whether or not the temperature gradient is smaller than the positive determination reference value.

6. Effects and so on of the First Embodiment

According to the charging apparatus 20 described above, the maximum cooling period of time Tm is set appropriately based upon the cooling coefficient $\alpha$ representing the cooling performance of the battery 30. Therefore, it is possible to inhibit the fan 53 from cooling the battery 30 wastefully, which contributes to reduction in the electric power consumption of the apparatus 20.

Further, the charging apparatus 20 calculates the maximum cooling period of time Tm with the battery temperature and the environmental temperature at a time of completion of charging the battery 30 as well as with the cooling coefficient $\alpha$. In such way, considering the battery temperature and the environmental temperature at a time of completion of charging the battery 30 allows the CPU 51a to determine with high precision how long at the most the fan 53 needs to be activated to cool the battery 30 down to an intended temperature level after completion of charging the battery 30 (i.e., the maximum cooling period of time Tm).

Further, the charging apparatus 20 refers to a target temperature value of the battery temperature at which the fan 53 is to be deactivated (fan-deactivation target temperature Tf) to estimate a period of time possibly required for the battery temperature to reach the target temperature value after completion of charging the battery 30. The charging apparatus 20 then sets the estimated period of time to the maximum cooling period of time Tm. Therefore, it is possible to inhibit the fan 53 from remaining activated when the battery temperature falls below the fan-deactivation target temperature Tf, which contributes to effective reduction in the electric power consumption.

The battery pack 10 stores the cooling coefficient $\alpha$ of the battery 30 incorporated therein, and the charging apparatus 20 obtains the cooling coefficient $\alpha$ of the battery 30 from the battery pack 10. In such way, the CPU 51a can reliably and easily obtain the cooling coefficient $\alpha$ of the battery 30 being an object to be charged.

The charging apparatus 20 determines, after completion of charging the battery 30, the presence or absence of the cooling mechanism in the battery pack 10 mounted on the charging apparatus 20 and deactivates the fan 53 in the absence of the cooling mechanism (see S120 etc. in FIG. 5). Therefore, wasteful operation of the fan 53 can be inhibited, which contributes to reduction in the electric power consumption of the charging apparatus 20.

The charging apparatus 20 deactivates the fan 53 when the temperature gradient of the battery temperature is negative and is greater than the change rate negative threshold value "-a", even before timing out, after completion of charging the battery 30 (see S310 etc. in FIG. 5). Therefore, it is possible to effectively reduce electric power consumption while appropriately cooling the battery 30.

After completion of charging the battery 30, the charging apparatus 20 deactivates the fan 53 when the temperature gradient of the battery temperature is equal to or greater than zero and the predetermined period of time has elapsed since completion of charging the battery 30, even before timing out, (see S300 etc. in FIG. 5). Therefore, it is possible to effectively reduce electric power consumption while preventing a temperature increase of the battery 30.

According to the first embodiment, the power source circuit 50 corresponds to an example of a charging unit of the present invention, the charging-control microcomputer 51 corresponds to examples of a control unit, an information obtaining unit, a setting unit, a battery temperature obtaining unit, an environmental temperature obtaining unit, and a determining unit, of the present invention. The fan-deactivation target temperature Tf corresponds to an example of a specified temperature of the present invention. The value "zero", being the determination reference value at S290, corresponds to an example of a change rate positive threshold value of the present teachings.

Each process of the charging and fan-control process illustrated in FIGs. 5A and 5B corresponds, as follows, to each process implemented by the charging apparatus of the present teachings. The process at S110 corresponds to an example of a process implemented by the information obtaining unit of the present teachings, the process at S120 corresponds to an example of a process implemented by the determining unit of the present teachings, the processes at S170 and S200 correspond to examples of processes implemented by the battery temperature obtaining unit of the present teachings, the processes at S140 and S150 correspond to examples of processes implemented by the environmental temperature obtaining unit of the present teachings, the processes at S180 and S210 correspond to examples of processes implemented by the setting unit of the present teachings, a series of processes proceeded from S230 or S260 to S280 corresponds to an example of processes implemented by the control unit of the present teachings, and the process at S250 corresponds to an example of a process implemented by the calculating unit of the present teachings.

[Second Embodiment]

According to the second embodiment, described below is another method of calculating a maximum cooling period of time Tm. According to the first embodiment, the equation (1) is employed to estimate how long it takes for the battery temperature to fall down to the fan-deactivation target temperature Tf after completion of charging the battery 30, and the estimated period of time is set to the maximum cooling period of time Tm.

According to the second embodiment, a fan-deactivation target change rate Dt (equal to or smaller than zero), not the fan-deactivation target temperature Tf, is preliminarily stored in the memory 51b of the charging apparatus 20. The charging-control microcomputer 51 refers to the fan-deactivation target change rate Dt and estimates how long it is required for the change rate of the battery temperature to become equal to or greater than the fan-deactivation target change rate Dt after completion of charging the battery 30. In other words, the charging-control microcomputer 51 estimates how long it is required for the declining rate of the battery temperature to become moderate. The estimated period of time is set to the maximum cooling period of time Tm.

Basically, the maximum cooling period of time Tm is mathematically estimated by use of the equation (1). An equation (2) as below is obtained by differentiating both sides of the equation (1) with respect to "t":

$$dT(t)/dt = -\alpha * (T(0) - Ts) * EXP(-\alpha * t) \qquad (2)$$

With "dT(t)/dt" in the left side of the equation (2) as the fan-deactivation target change rate Dt, the equation (2) is solved for "t". The time t is then calculated as an estimated period of time required for the change rate of the battery temperature to become the fan-deactivation target change rate Dt after completion of charging the battery 30.

The charging-control microcomputer 51 sets the time t calculated as above to the maximum cooling period of time Tm. After setting the maximum cooling period of time Tm, just like the first embodiment, the charging-control microcomputer 51 sets the maximum cooling period of time Tm to a time-out time (S190 or S220 in FIG. 5A). The fan-deactivation target change rate Dt corresponds to an example of a specified change rate of the present teachings.

According to the second embodiment, the estimated period of time required for the change rate of the battery temperature to become equal to or greater than the fan-deactivation target change rate Dt is calculated and set to the maximum cooling period of time Tm. Therefore, it is possible to inhibit the fan 53 from being kept activated even when the change rate of the battery temperature exceeds the fan-deactivation target change rate Dt, which leads to effective reduction in electric power consumption.

[Third Embodiment]

According to the third embodiment, described below is another method of calculating the maximum cooling period of time Tm. Considering the "EXP(-$\alpha$*t)" as a constant value (temperature damping factor) ß, the above equation (1) is deformed to an equation (3):

$$ß = \{T(t) - Ts\} / \{T(0) - Ts\} \qquad (3)$$

In the above equation (3), as is the case with the first embodiment, considering T(t) as the fan-deactivation target temperature Tf, the temperature damping factor ß is easily obtained by use of the equation (3) at a time of completion of charging the battery 30. As described, according to the third embodiment, the charging-control microcomputer 51 calculates the temperature damping factor ß by use of the equation (3) at a time of completion of charging the battery 30.

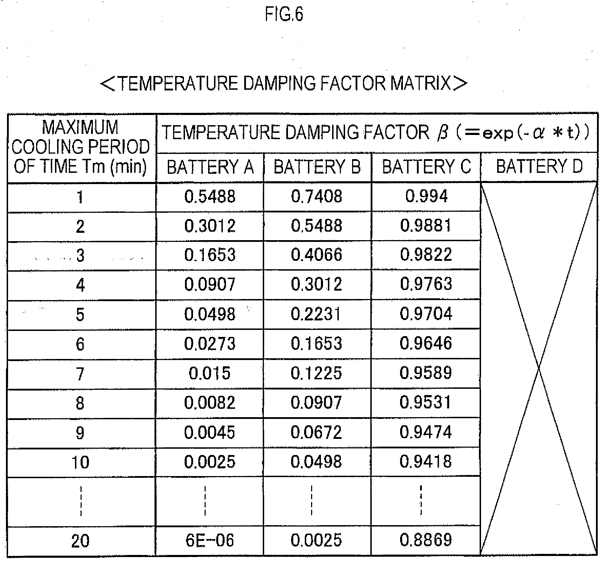

There is preliminarily stored, in the memory 31b of the battery pack 10, a temperature damping factor matrix in which a correspondence relation between the maximum cooling period of time Tm and the temperature damping factor ß is presented in a matrix at a certain time interval (e.g., one minute interval). The temperature damping factor matrix is exemplarily illustrated in FIG. 6 regarding four different types of batteries A, B, C, and D. For example, assuming that the battery A represents the battery 30 of the battery pack 10, the memory 31b of the battery pack 10 stores the temperature damping factor matrix associating the maximum cooling period of time Tm to the temperature damping factor ß of the battery A in Fig. 6. As seen from FIG. 6, the battery D has no temperature damping factor matrix set, which means that the battery D is not provided with a cooling mechanism.

The temperature damping factor matrix in FIG. 6 explains that, for example when the temperature damping factor ß of the battery A is 0.5488 or more, one minute is appropriate as the maximum cooling period of time Tm of the battery A. For example, when the temperature damping factor ß of the battery A is 0.3012 or more and less than 0.5488, two minutes is appropriate as the maximum cooling period of time Tm of the battery A. That is, the smaller the temperature damping factor ß is, the greater the maximum cooling period of time Tm is set to be.

The memory 31b of the battery pack 10 preliminarily stores the temperature damping factor matrix, for example, for the battery A in FIG. 6. Therefore, when the charging-control microcomputer 51 of the charging apparatus 20 calculates the maximum cooling period of time Tm, the charging-control microcomputer 51 calculates the temperature damping factor ß by use of the above equation (3) and also obtains the temperature damping factor matrix from the battery pack 10. The charging-control microcomputer 51 then calculates (selects), with reference to the temperature damping factor matrix obtained, the maximum cooling period of time Tm corresponding to the temperature damping factor ß calculated by the equation (3). For example, when the temperature damping factor ß calculated by the equation (3) is 0.1, in accordance with the temperature damping factor matrix, the maximum cooling period of time Tm will be four minutes ($0.0907 \leq ß < 0.1653$).

As described above, preparation of the matrix between the maximum cooling period of time Tm and the temperature damping factor ß at a certain time interval and considering the "EXP($-\alpha$*t)" as the constant value ß obviates the need for charging-control microcomputer 51 to calculate the exponent function, which leads to simple calculation of the appropriate maximum cooling period of time Tm.

[Other Embodiments]

(1) The cooling coefficients $\alpha$ of the first and second embodiments and the temperature damping factor matrix of the third embodiment are information specific to batteries. According to each embodiment, such information is preliminarily stored in the battery pack 10 and obtained from the battery pack 10 by the charging apparatus 20 when needed.

However, it is not always necessary to obtain such information specific to batteries from the battery pack 10, and the charging apparatus 20 may obtain such information by other methods. For example, there may be preliminarily stored in the memory 51b of the charging apparatus 20 information specific to each battery, and the charging apparatus 20 may obtain information on the battery from the battery pack 10 when the battery pack 10 is mounted on the charging apparatus so that the charging apparatus 20 employs the specific information corresponding to the battery information.

In the event that the memory 51b of the charging apparatus 20 does not have the specific information corresponding to the battery information obtained from the battery pack, the charging apparatus 20 may request the battery pack to provide information specific to the battery.

(2) According to the above embodiments, the environmental temperature is adapted to be detected based upon the detection signal from the thermistor 52 inside the charging apparatus 20 at a time of completion of charging the battery 30. Alternatively, other detecting methods or timings of the environmental temperature may be applicable. For example, a thermistor may be provided outside of the casing of the charging apparatus 20, and the environmental temperature may be detected (measured) based upon the detection signal from the thermistor. As a further example, a thermistor may detect a temperature inside the charging apparatus 20 when the charging apparatus 20 is supplied with a power source, and the temperature detected may be employed as the environmental temperature. As a still further example, a thermistor may detect a temperature inside the charging apparatus 20 at a given timing within a certain period of time where no charging is carried on, and the temperature detected may be employed as the environmental temperature. As a still further example, an environmental temperature may be estimated by adding a specific condition, for example by estimation calculation with the above equation (1).

(3) According to the above embodiments, when the battery pack is not provided with a cooling mechanism, the fan is deactivated after completion of charging the battery. Alternatively, when the battery pack is not provided a the cooling mechanism, the fan may be adapted not to operate from the charging starting time. Still alternatively, when the battery pack is not provided a the cooling mechanism, even if the fan is activated in the course of charging, the frequency or duration to activate the fan may be set smaller than that when the battery pack is provided with a cooling mechanism.

(4) Controlling the fan of the charging apparatus is not limited to control by a microcomputer and may be performed by other controlling methods including an IC incorporating a control function, for example.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

**Claims**

1. A charging apparatus (20) comprising
   a charging unit (50) configured to supply an electric power to a rechargeable battery (10, 30) to charge the rechargeable battery (10, 30),
   a fan (53) configured to send air to the rechargeable battery (10, 30), and
   a control unit (51) adapted to activate the fan (53) and to deactivate the fan 853) when a predetermined maximum cooling period (Tm) is elapsed from completion of charging the rechargeable battery (10, 30) by the charging unit (50),
   **characterized in that**
   the control unit (51) is adapted to activate the fan (53) when a predetermined cooling-execution condition is satisfied after initiation of charging the rechargeable battery (10, 30) by the charging unit (50) and to deactivate the fan (53) when a predetermined maximum cooling period of time (Tm) is elapsed from completion of charging the rechargeable battery (10, 30) by the charging unit (50) even when the predetermined cooling-execution condition has been satisfied after completion of charging the rechargeable battery (10, 30) by the charging unit (50), and
   the charging apparatus further comprises
   an information obtaining unit (51) configured to obtain a cooling-performance information that represents coolability of the rechargeable battery (10, 30) and is preliminarily stored in the battery, and
   a setting unit (51) configured to set the maximum cooling period of time (Tm) based upon the cooling-performance information obtained by the information obtaining unit (51).

2. The charging apparatus (20) according to Claim 1, further comprising:

   a battery temperature obtaining unit (51) configured to obtain a battery temperature, the battery temperature being a temperature of the rechargeable battery (10, 30); and
   an environmental temperature obtaining unit (51) configured to obtain an environmental temperature, the environmental temperature being an ambient temperature of the rechargeable battery (10, 30),
   wherein the setting unit (51) sets the maximum cooling period of time (Tm) further based upon the battery temperature obtained by the battery temperature obtaining unit (51) and the environmental temperature obtained by the environmental temperature obtaining unit (51) after completion of charging the rechargeable battery (10, 30).

3. The charging apparatus (20) according to Claim 2, wherein, the setting unit (51) sets the maximum cooling period of time (Tm) further based upon a predetermined specified temperature so that the fan (53) is deactivated when it is estimated that the battery temperature is equal to or smaller than the predetermined specified temperature.

4. The charging apparatus (20) according to Claim 2, wherein, the setting unit (51) sets the maximum cooling period of time (Tm) further based upon a predetermined specified change rate so that the fan (53) is deactivated when it is estimated that a change rate of the battery temperature is equal to or greater than the predetermined specified change rate being zero or less.

5. The charging apparatus (20) according to any one of Claims 1 to 4, wherein the rechargeable battery (10, 30) comprises a storage unit (31b) configured to store the cooling-performance information of the rechargeable battery (10, 30), and the information obtaining unit (51) is configured to obtain the cooling-performance information from the storage unit (31b).

6. The charging apparatus (20) according to any one of Claims 1 to 5 further comprising:

a determining unit (51) configured to determine whether or not the rechargeable battery (10, 30) comprises a cooling mechanism to cool the rechargeable battery (10, 30) by receiving the air sent from the fan (53), the determination being based on the value of the obtained cooling-performance information and

wherein the control unit (51) is configured to deactivate the fan (53) at least after completion of charging the rechargeable battery (10, 30) when the determining unit (51) determines that the rechargeable battery (10, 30) does not include the cooling mechanism.

7. The charging apparatus (20) according to any one of Claims 1 to 6, further comprising:

a calculating unit (51) configured to calculate a change rate of the battery temperature,

wherein, even if the maximum cooling period of time (Tm) has not elapsed after completion of charging the rechargeable battery (10, 30), the control unit (51) is configured to deactivate the fan (53) when the change rate of the battery temperature calculated by the calculating unit (51) is negative and is equal to or greater than a predetermined change rate negative threshold value smaller than zero.

8. The charging apparatus (20) according to any one of Claims 1 to 7, further comprising:

a calculating unit (51) configured to calculate a change rate of the battery temperature,

wherein, even if the maximum cooling period of time (Tm) has not elapsed after completion of charging the rechargeable battery (10, 30), the control unit (51) is configured to deactivate the fan (53) when the change rate of the battery temperature calculated by the calculating unit (51) is equal to or greater than a predetermined change rate positive threshold value equal to or greater than zero.

**Patentansprüche**

1. Ladegerät (20), mit

einer Ladeeinheit (50), die dazu konfiguriert ist, eine elektrische Leistung einer wiederaufladbaren Batterie (10, 30) zum Laden der wiederaufladbaren Batterie (10, 30) zuzuführen,

einem Gebläse (53), das dazu konfiguriert ist, Luft an die wiederaufladbare Batterie (10, 30) zu befördern, und

einer Steuerungseinheit (51), die dazu angepasst ist, das Gebläse (53) zu aktivieren und das Gebläse (53) zu deaktivieren, wenn eine vorbestimmte maximale Kühlungszeitdauer (Tm) nach Abschluss des Ladens der wiederaufladbaren Batterie (10, 30) durch die Ladeeinheit (50) verstrichen ist,

**dadurch gekennzeichnet, dass**,

die Steuerungseinheit (51) angepasst ist, das Gebläse (53) zu aktivieren, wenn eine vorbestimmte Kühlungsausführungsbedingung nach Beginn des Ladens der wiederaufladbaren Batterie (10, 30) durch die Ladeeinheit (50) erfüllt ist, und das Gebläse (53) zu deaktivieren, wenn eine vorbestimmte maximale Kühlungszeitdauer (Tm) nach Abschluss des Ladens der wiederaufladbaren Batterie (10, 30) durch die Ladeeinheit (50) verstrichen ist, auch wenn die vorbestimmte Kühlungsausführungsbedingung nach Abschluss des Ladens der wiederaufladbaren Batterie (10, 30) durch die Ladeeinheit (50) erfüllt wurde, und

das Ladegerät weiter

eine Informationseinholeinheit (51), die dazu konfiguriert ist, eine Kühlungsverhaltensinformation einzuholen, die die Kühlbarkeit der wiederaufladbaren Batterie (10, 30) repräsentiert und im Vorfeld in der Batterie gespeichert ist, und

einer Festlegungseinheit (51) aufweist, die dazu konfiguriert ist, die maximale Kühlungszeitdauer (Tm) basierend auf der Kühlungsverhaltensinformation, die durch die Informationseinholeinheit (51) eingeholt wird, festzulegen.

2. Ladegerät (20) nach Anspruch 1, das weiter

eine Batterietemperatureinholeinheit (51), die dazu konfiguriert ist, eine Batterietemperatur einzuholen, wobei die Batterietemperatur eine Temperatur der wiederaufladbaren Batterie (10, 30) ist, und

eine Umgebungstemperatureinholeinheit (51) aufweist, die dazu konfiguriert ist, eine Umgebungstemperatur einzuholen, wobei die Umgebungstemperatur eine Umgebungstemperatur der wiederaufladbaren Batterie (10, 30) ist, bei dem die Festlegungseinheit (51) die maximale Kühlungszeitdauer (Tm) weiter basierend auf der Batterietemperatur, die durch die Batterietemperatureinholeinheit (51) eingeholt wird, und der Umgebungstemperatur, die durch die Umgebungstemperatureinholeinheit (51) eingeholt wird, nach Abschluss des Ladens der wiederaufladbaren Batterie (10, 30) festlegt.

3. Ladegerät (20) nach Anspruch 2, bei dem die Festlegungseinheit (51) die maximale Kühlungszeitdauer (Tm) weiter basierend auf einer vorbestimmten spezifischen Temperatur festlegt, so dass das Gebläse (53) deaktiviert wird, wenn es bestimmt wird, dass die Batterietemperatur gleich oder kleiner als die vorbestimmte spezifische Temperatur ist.

4. Ladegerät (20) nach Anspruch 2, bei dem die Festlegungseinheit (51) die maximale Kühlungszeitdauer (TM) weiter basierend auf einer vorbestimmten spezifischen Änderungsrate festlegt, so dass das Gebläse (53) deaktiviert wird, wenn es bestimmt wird, dass eine Änderungsrate der Temperatur gleich oder größer als die vorbestimmte spezifische Änderungsrate ist, die gleich Null oder geringer ist.

5. Ladegerät (20) nach einem der Ansprüche 1 bis 4, bei dem die wiederaufladbare Batterie (10, 30) eine Speichereinheit (31 b) aufweist, die dazu konfiguriert ist, die Kühlungsverhaltensinformation der wiederaufladbaren Batterie (10, 30) zu speichern, und die Informationseinholeinheit (51) dazu konfiguriert ist, die Kühlungsverhaltensinformation von der Speichereinheit (31b) einzuholen.

6. Ladegerät (20) nach einem der Ansprüche 1 bis 5, das weiter eine Bestimmungseinheit (51) aufweist, die dazu konfiguriert ist, durch Empfangen der Luft, die von dem Gebläse (53) gesendet wird, zu bestimmen, ob die wiederaufladbare Batterie (10, 30) einen Kühlungsmechanismus zum Kühlen der wiederaufladbaren Batterie (10, 30) aufweist oder nicht, wobei die Bestimmung auf dem Wert der eingeholten Kühlungsverhaltensinformation basiert, und bei dem die Steuerungseinheit (51) dazu konfiguriert ist, das Gebläse (53) zumindest nach Abschluss des Ladens der wiederaufladbaren Batterie (10, 30) zu deaktivieren, wenn die Bestimmungseinheit (51) bestimmt, dass die wiederaufladbare Batterie (10, 30) keinen Kühlungsmechanismus enthält.

7. Ladegerät (20) nach einem der Ansprüche 1 bis 6, das weiter eine Berechnungseinheit (51) aufweist, die dazu konfiguriert ist, eine Änderungsrate der Batterietemperatur zu berechnen, bei dem, auch wenn die maximale Kühlungszeitdauer (Tm) nach Abschluss des Ladens der wiederaufladbaren Batterie (10, 30) nicht verstrichen ist, die Steuerungseinheit (51) dazu konfiguriert ist, das Gebläse (53) zu deaktivieren, wenn die Änderungsrate der Batterietemperatur, die durch die Berechnungseinheit (51) berechnet wird, negativ ist und gleich oder größer als ein vorbestimmter negativer Änderungsratens Schwellwert ist, der kleiner als Null ist.

8. Ladegerät (20) nach einem der Ansprüche 1 bis 7, das weiter eine Berechnungseinheit (51) aufweist, die dazu konfiguriert ist, eine Änderungsrate der Batterietemperatur zu berechnen, bei der, auch wenn die maximale Kühlungszeitdauer (Tm) nach Abschluss des Ladens der wiederaufladbaren Batterie (10, 30) nicht verstrichen ist, die Steuerungseinheit (51) dazu konfiguriert ist, das Gebläse (53) zu deaktivieren, wenn die Änderungsrate der Batterietemperatur, die durch Berechnungseinheit (51) berechnet wird, gleich oder größer als ein vorbestimmter positiver Änderungsratenschwellenwert ist, der gleich oder größer als Null ist.

## Revendications

1. Appareil de charge (20), comprenant :

une unité de charge (50) configurée pour fournir une énergie électrique à une batterie rechargeable (10, 30) pour charger la batterie rechargeable (10, 30), un ventilateur (53) configuré pour envoyer de l'air à la batterie rechargeable (10, 30), et une unité de commande (51) adaptée pour activer le ventilateur (53) et pour désactiver le ventilateur (53) lorsqu'une période de refroidissement maximum prédéterminée (Tm) s'est écoulée, depuis l'achèvement de la charge de la batterie rechargeable (10, 30) par l'unité de charge (50), **caractérisé en ce que** l'unité de commande (51) est adaptée pour activer le ventilateur (53) lorsqu'une condition d'exécution de refroidissement prédéterminée est respectée après le commencement de la charge de la batterie rechargeable (10, 30) par l'unité de charge (50) et pour désactiver le ventilateur (53) lorsqu'une période de refroidissement maximum prédéterminée (Tm) s'est écoulée, depuis l'achèvement de la charge de la batterie rechargeable (10, 30) par l'unité de charge (50), même lorsque la condition d'exécution de refroidissement prédéterminée a été respectée après l'achèvement de la charge de la batterie rechargeable (10, 30) par l'unité de charge (50), et l'appareil de charge comprend en outre une unité d'obtention d'information (51) configurée pour obtenir une information de performance de refroidissement qui représente l'aptitude au refroidissement de la batterie rechargeable (10, 30) et est préliminairement stockée dans la batterie, et

une unité de réglage (51) configurée pour régler la période de refroidissement maximum (Tm) en fonction de l'information de performance de refroidissement obtenue par l'unité d'obtention d'information (51).

2. Appareil de charge (20) selon la revendication 1, comprenant en outre :

une unité d'obtention de température de batterie (51) configurée pour obtenir une température de batterie, la température de batterie étant une température de la batterie rechargeable (10, 30) ; et

une unité d'obtention de température d'environnement (51) configurée pour obtenir une température d'environnement, la température d'environnement étant une température ambiante de la batterie rechargeable (10, 30), dans lequel l'unité de réglage (51) règle la période de refroidissement maximum (Tm) en fonction, en outre, de la température de batterie obtenue par l'unité d'obtention de température de batterie (51) et de la température d'environnement obtenue par l'unité d'obtention de température d'environnement (51) après l'achèvement de la charge de la batterie rechargeable (10, 30).

3. Appareil de charge (20) selon la revendication 2, dans lequel l'unité de réglage (51) règle la période de refroidissement maximum (Tm) en fonction, en outre d'une température spécifiée prédéterminée pour que le ventilateur (53) soit désactivé lorsqu'il est estimé que la température de batterie est égale ou inférieure à la température spécifiée prédéterminée.

4. Appareil de charge (20) selon la revendication 2, dans lequel, l'unité de réglage (51) règle la période de refroidissement maximum (Tm) en fonction, en outre, d'un taux de changement spécifié prédéterminé pour que le ventilateur (53) soit désactivé lorsqu'il est estimé qu'un taux de changement de la température de batterie est égal ou supérieur au taux de changement spécifié prédéterminé, étant zéro ou moins.

5. Appareil de charge (20) selon l'une quelconque des revendications 1 à 4, dans lequel la batterie rechargeable (10, 30) comprend une unité de stockage (31 b) configurée pour stocker l'information de performance de refroidissement de la batterie rechargeable (10, 30), et l'unité d'obtention d'information (51) est configurée pour obtenir l'information de performance de refroidissement à partir de l'unité de stockage (31 b).

6. Appareil de charge (20) selon l'une quelconque des revendications 1 à 5 comprenant en outre :

une unité de détermination (51) configurée pour déterminer si la batterie rechargeable (10, 30) comprend ou non un mécanisme de refroidissement pour refroidir la batterie rechargeable (10, 30) en recevant l'air envoyé à partir du ventilateur (53), la détermination étant fondée sur la valeur de l'information de performance de refroidissement obtenue, et

dans lequel l'unité de commande (51) est configurée pour désactiver le ventilateur (53) au moins après l'achèvement de la charge de la batterie rechargeable (10, 30) lorsque l'unité de détermination (51) détermine que la batterie rechargeable (10, 30) n'inclut pas le mécanisme de refroidissement.

7. Appareil de charge (20) selon l'une quelconque des revendications 1 à 6, comprenant en outre :

une unité de calcul (51) configurée pour calculer un taux de changement de la température de batterie, dans lequel, même si la période de refroidissement maximum (Tm) ne s'est pas écoulée après l'achèvement de la charge de la batterie rechargeable (10, 30), l'unité de commande (51) est configurée pour désactiver le ventilateur (53) lorsque le taux de changement de la température de batterie calculé par l'unité de calcul (51) est négatif et est égal ou supérieur à une valeur de seuil négative prédéterminée de taux de changement inférieure à zéro.

8. Appareil de charge (20) selon l'une quelconque des revendications 1 à 7, comprenant en outre :

une unité de calcul (51) configurée pour calculer un taux de changement de la température de batterie,

dans lequel, même si la période de refroidissement maximum (Tm) ne s'est pas écoulée après l'achèvement de la charge de la batterie rechargeable (10, 30), l'unité de commande (51) est configurée pour désactiver le ventilateur (53) lorsque le taux de changement de la température de batterie calculé par l'unité de calcul (51) est égal ou supérieur à une valeur de seuil positive prédéterminée de taux de changement égale ou supérieure à zéro.

FIG.1A

FIG.1B

FIG.2

FIG.3

FIG.4A

COOLING COEFFICIENT $\alpha$

BATTERY CELL SPECIFIC HEAT

FIG.4B

| | $\alpha$ |
|---|---|
| BATTERY A | 0.01 |
| BATTERY B | 0.005 |
| BATTERY C | 0.0001 |
| BATTERY D | 0<br>(NO COOLING<br>MECHANISM) |

COOLABILITY: HIGH

COOLABILITY: LOW

FIG.5A

START

START CHARGING AND ACTIVATING FAN — S10

COMPLETE CHARGING — S20

OBTAIN COOLING COEFFICIENT $\alpha$ FROM BATTERY PACK — S110

COOLING MECHANISM INCLUDED? — S120 → NO → (A)

YES

ENVIRONMENTAL TEMPERATURE DETECTABLE? — S130 → NO

YES

DETECT ENVIRONMENTAL TEMPERATURE — S140

SET ENVIRONMENTAL TEMPERATURE TO GIVEN VALUE — S150

BATTERY TEMPERATURE OBTAINABLE? — S160 → NO

YES

OBTAIN BATTERY TEMPERATURE FROM BATTERY PACK — S170

CALCULATE MAXIMUM COOLING PERIOD OF TIME Tm — S180

SET TIMER (Tm) — S190

(B)

SET BATTERY TEMPERATURE TO GIVEN VALUE — S200

CALCULATE MAXIMUM COOLING PERIOD OF TIME Tm — S210

SET TIMER (Tm) — S220

TIME OUT? — S230 → NO

YES

(A)

FIG.5B

Ⓑ

OBTAIN BATTERY TEMPERATURE
FROM BATTERY PACK —S240

CALCULATE DIFFERENTIAL VALUE
OF BATTERY TEMPERATURES —S250
(TEMPERATURE GRADIENT)

S260— TIME OUT? —YES→ Ⓐ

NO

S270— HIGH
TEMPERATURE? —YES

NO

S290

Ⓐ→ TEMPERATURE
GRADIENT < 0? —YES

NO

S280 S310

DEACTIVATE FAN TEMPERATURE
GRADIENT > -a? —NO

YES

Ⓐ

S300

PREDETERMINED
PERIOD OF TIME —NO
ELAPSED?

YES

Ⓐ

END

S320—

ACTIVATE FAN
(CONTINUE OR RESTART)

FIG.6

<TEMPERATURE DAMPING FACTOR MATRIX>

| MAXIMUM COOLING PERIOD OF TIME Tm (min) | TEMPERATURE DAMPING FACTOR $\beta$ ($=\exp(-\alpha * t)$) | | | |
|---|---|---|---|---|
| | BATTERY A | BATTERY B | BATTERY C | BATTERY D |
| 1 | 0.5488 | 0.7408 | 0.994 | |
| 2 | 0.3012 | 0.5488 | 0.9881 | |
| 3 | 0.1653 | 0.4066 | 0.9822 | |
| 4 | 0.0907 | 0.3012 | 0.9763 | |
| 5 | 0.0498 | 0.2231 | 0.9704 | |
| 6 | 0.0273 | 0.1653 | 0.9646 | |
| 7 | 0.015 | 0.1225 | 0.9589 | |
| 8 | 0.0082 | 0.0907 | 0.9531 | |
| 9 | 0.0045 | 0.0672 | 0.9474 | |
| 10 | 0.0025 | 0.0498 | 0.9418 | |
| ⋮ | ⋮ | ⋮ | ⋮ | |
| 20 | 6E–06 | 0.0025 | 0.8869 | |

**EP 2 757 654 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004171796 A
- US 20070298315 A1
- JP 3883395 B